# EUROPEAN PATENT APPLICATION

(11) **EP 4 667 322 A1**
(43) Date of publication of application: **24.12.2025**
(21) Application number: 24756539.3
(22) Date of filing: 16.01.2024
(51) Int. Cl.: B62D 1/10, B60R 21/203

(54) **VEHICLE STEERING WHEEL DEVICE**

(30) Priority: 15.02.2023 JP 2023021627
(71) Applicant: Autoliv Development AB, 44783 Vargarda (SE)
(72) Inventor: KIM, Jinkeun, Yokohama-shi, Kanagawa 222-8580 (JP); GO, Rodel, Yokohama-shi, Kanagawa 222-8580 (JP); MATSUI, Kenta, Yokohama-shi, Kanagawa 222-8580 (JP)
(74) Representative: Schön, Thilo
(86) International application number: PCT/JP2024/000915
(87) International publication number: WO 2024/171688

(57) **Abstract**

To provide a vehicle steering wheel device capable of reliably ensuring the engagement and retention function of an object relative to the steering wheel. A vehicle steering wheel device, in which an engaging member 8, which is attached to a central core metal part 3 of the steering wheel, engages with an engaging part 6 of an accessory member and couples the accessory member 8 [sic] to the central core metal part 3, the engaging member 8 is composed of a wire 9 and includes a fold-back part 8a that changes the extending direction of the wire 9 at an intermediate portion in the extending direction of the wire 9, and a first shaft part 8b and a second shaft part 8c formed on both sides of the fold-back part 8a, and the engaging member 8 are configured such that the first shaft part 8b and the second shaft part 8c are attached to the central core metal part 3 in a twisted positional relationship when engaged with the engaging part 6 of the accessory member.

## Description

### TECHNICAL FIELD

The present invention relates to a vehicle steering wheel device that can reliably ensure the engagement and retention of objects, such as accessory members, with the steering wheel.

### BACKGROUND ART

For example, Patent Documents 1 to 3 disclose techniques for attaching an airbag unit or the like as an accessory member to a steering wheel of a vehicle using an engaging structure such as a snap fit.

The "steering wheel" of Patent Document 1 aims to provide a steering wheel to which an accessory can be stably attached to the wheel main body, and the steering wheel has a wheel main body and an accessory apparatus. The accessory apparatus has a mounting member. The mounting member has a plate-shaped base part extending in the direction of the rotational axis of the wheel main body (front-to-back direction), and a pair of plate-shaped arm parts that are both end parts of the base in the width direction and bend in a direction intersecting the front-to-back direction starting from the front portion of the same base part. Arm parts are shaped to protrude in a direction intersecting the front-to-back direction while being separated from each other. A clip made of an elastic wire is attached to the wheel main body. The rear ends of the pair of arm parts engage with the engaging part of the clip in a manner that restricts separation between the wheel main body and the accessory apparatus in the front-to-back direction.

The "mounting structure for a driver airbag device" of Patent Document 2 has the objective of suppressing the shape of the base plate from becoming complicated while properly retaining the snap pin, and the main body of the steering wheel includes a core metal and a base plate attached to the core metal. The airbag device includes a snap pin that protrudes toward the base plate. A separate retention member is engaged with the engagement hole of the base plate. A clip is engaged with the retention member, and the snap pin is received and retained in a receiving part of the retention member and engaged with the clip, thereby attaching the airbag device to the main body.

With the "steering wheel" of Patent Document 3, a core metal constituting the framework portion of the steering wheel is attached to the rear end part of a steering shaft extending in the front-to-back direction. An airbag device and a control device for controlling the operation of in-vehicle devices are assembled to the steering wheel. The control device used has an outer shell portion constituting a mounting member. The control device is fastened to the core metal by a screw in the mounting member. A main part of the airbag device is disposed rearward of the mounting member. In order to attach the airbag device to the mounting member, through holes are provided at a plurality of locations on the mounting member. The snap pin attached to the airbag device is inserted into the through hole and is attached at the front end thereof to the mounting member by using a snap-fit structure.

### RELATED ART DOCUMENTS

### PATENT DOCUMENTS

Patent Document 1: Japanese Unexamined Patent Application Publication 2017-128309
Patent Document 2: Japanese Unexamined Patent Application Publication 2017-222281
Patent Document 3: Japanese Unexamined Patent Application Publication 2019-034596

### SUMMARY OF THE INVENTION

### PROBLEM TO BE SOLVED BY THE INVENTION

In all of the background art, the engagement with the object to be engaged/locked relies solely on the bending elastic force of a wire such as a clip or snap spring provided on the steering wheel side (see, for example, [0011] and [0024] of Patent Document 1; [0052] of Patent Document 2; and [0048] of Patent Document 3).

For this reason, relative movement such as vibration that occurs between the steering wheel side and an object such as an accessory member (for example, a module damper or snap-fit pin that secures the airbag module to the core metal) can easily cause elastic bending deformation in the wire.

Thus, there has been a problem in that the elastic force generated by the elastic bending deformation of the wire alone is not sufficient to ensure engagement and retention of the object with respect to the steering wheel.

Furthermore, vibrations from the vehicle could cause the wires to move, which could result in abnormal noise.

In light of the conventional problems described above, an object of the present invention is to provide a vehicle steering wheel device that is capable of sufficiently ensuring engagement and retention of an object while suppressing movement of the wire that retains an object on the steering wheel.

### MEANS FOR SOLVING THE PROBLEM

A vehicle steering wheel device according to a first aspect of the present invention includes:
an engaging member attached to a core metal of a steering wheel that engages an engaging part of an accessory member so as to couple the accessory member to the core metal, wherein
the engaging member is composed of a wire, and includes a fold-back part at an intermediate portion in the extending direction of the wire that changes the extending direction of the wire, and a first shaft part and a second shaft part formed on both sides of the fold-back part, and
the first shaft part and the second shaft part are attached to the core metal such that, in a state where the engaging part of the accessory member is engaged, the first shaft part and the second shaft part are in a twisted positional relationship.

In the first aspect described above, the first shaft part and the second shaft part may be attached to the core metal such that the first shaft part and the second shaft part are in a twisted positional relationship even in an initial state prior to engaging of the engaging part of the accessory member by the engaging member.

In the first aspect described above, the engaging member may be configured to engage the engaging part of the accessory member with the first shaft part by movement of the engaging part in a first direction, and
the engaging member may be configured such that movement of the engaging part of the accessory member in the first direction causes the first shaft part to be displaced in a second direction orthogonal to the first direction, thereby generating or increasing a torsional elastic moment in the fold-back part.

In the first aspect described above, the core metal may include a guide surface extending in the second direction, and
the guide surface may restrict deformation of the first shaft part in the first direction and promote displacement of the first shaft part in the second direction when the engaging part of the accessory member is engaged with the engaging member.

In the first aspect described above, the first shaft part of the engaging member may be attached to the front surface of the core metal, and the second shaft part may be attached to the core metal at a position three-dimensionally offset in the insertion direction of the steering shaft inserted into the boss part of the core metal relative to the front surface of the core metal to which the first shaft part is attached.

In the first aspect described above, the core metal preferably includes: an installation part on which the engaging part of the accessory member is installed,
a retention part, provided on a first surface of both the front and rear surfaces of the core metal near the installation part, the retention part rotatably supporting the first shaft part of the wire passing through the installation part about the axis of the wire and slidably retaining relative to the installation part, and
a support part, provided on a second surface of the front and rear surfaces of the core metal near the installation part, the support part supporting the second shaft part.

In the first aspect described above,
the wire may be configured to be elastically deformable in bending along the extending direction thereof and elastically deformable in torsion about the axis thereof;
the fold-back part of the wire may be configured to generate a torsional elastic moment about the axis of the wire; and
the support part of the core metal may retain the second shaft part such that the first shaft part is retained in a twisted state.

In the first aspect described above,
the engaging member is preferably configured such that, by engaging of the first shaft part with the engaging part of the accessory member, the first shaft part is slidably moved while being supported by the retention part, and
a torsional elastic moment is preferably generated in the fold-back part between the moved first shaft part and the second shaft part, with the second shaft part receiving a support reaction force from the support part, thereby pressing the first shaft part against the engaging part.
In the first aspect described above,
the support part preferably includes a vertical surface, and
the retention part preferably includes a horizontal surface that intersects with the vertical surface.

In the first aspect described above,
the first shaft part is preferably formed in a straight shape and is connected to the fold-back part, the second shaft part preferably includes a convex curved part connected to the fold-back part, the support part preferably includes a support surface oriented to face the fold-back part, and

the convex curved part is preferably brought into contact with and supported by the support surface such that a torsional elastic moment is generated in the fold-back part.

In the first aspect described above,
an additional support part may be provided separated from the support part that supports the second shaft part via the support part, and
a support reaction force of the second shaft part may be received by the additional support part, whereby a resilience force may be generated between the support part and the additional support part pressing the second shaft part against the support part.

In the first aspect described above
the second shaft part preferably includes a concave bent part connected to the convex curved part,
the additional support part is preferably provided separated from the support part and includes an additional support surface that blocks the first shaft part from the support surface; and
the concave bent part is preferably brought into contact with and supported by the additional support surface such that a resilience force is generated between the support surface and the additional support surface, thereby pressing the convex curved part against the support surface.

### EFFECT OF INVENTION

In the vehicle steering wheel device according to the first aspect of the present invention, the action of engaging and retaining the object can be sufficiently ensured while suppressing movement of the wire that retains the object on the steering wheel. In addition, by arranging the wire in such a way that the wire rises in the direction in which the object is connected to the steering wheel, vibration of the wire is suppressed and the shape of the core metal portion that extends in a planar fashion can be reduced in size compared to the conventional configuration.

### BRIEF DESCRIPTION OF THE DRAWINGS

FIG. 1 is a front view depicting one form of a steering wheel to which a preferred embodiment of a vehicle steering wheel device according to the present invention is applied;
FIG. 2 is an enlarged view of part X in FIG. 1;
FIG. 3 is an explanatory diagram of an engaging member attached to a central core metal part depicted in FIG. 2;
FIG. 4 is a perspective view of the central core metal part as viewed from the front side of the steering wheel, depicting the state in which the engaging member depicted in FIG. 3 is attached to the central core metal part
FIG. 5 is a perspective view of the central core metal part before the engaging member depicted in FIG. 3 is attached, as viewed from the front side of the steering wheel;
FIG. 6 is a side view of the central core metal part depicted in FIG. 4;
FIG. 7 is a view of the central core metal part depicted in FIG. 4 as viewed from the front side of the steering wheel;
FIG. 8 is a view of the central core metal part depicted in FIG. 4 as viewed from the back side of the steering wheel;
FIG. 9 is a view taken in the direction of the arrow A in FIG. 7;
FIG. 10 is a view taken in the direction of the arrow B in FIG. 7;
FIG. 11 is a view taken in the direction of the arrow C in FIG. 7; and
FIG. 12 is an explanatory diagram of a procedure for attaching the engaging member depicted in FIG. 3 to the central core metal part.

### EMBODIMENTS OF THE INVENTION

A suitable embodiment of the vehicle steering wheel device according to the present invention is described in detail below with reference to the accompanying drawings.

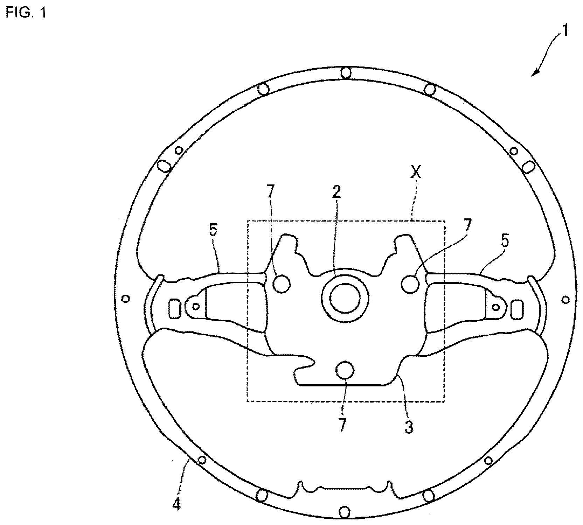

As depicted in FIG. 1, a steering wheel 1 is roughly formed to include a central core metal part 3 having a boss part 2 for connecting a steering shaft, a rim part 4 having a circular or other shape that is gripped by the driver, and a plurality of spoke parts 5 connecting the rim part 4 and the central core metal part 3.

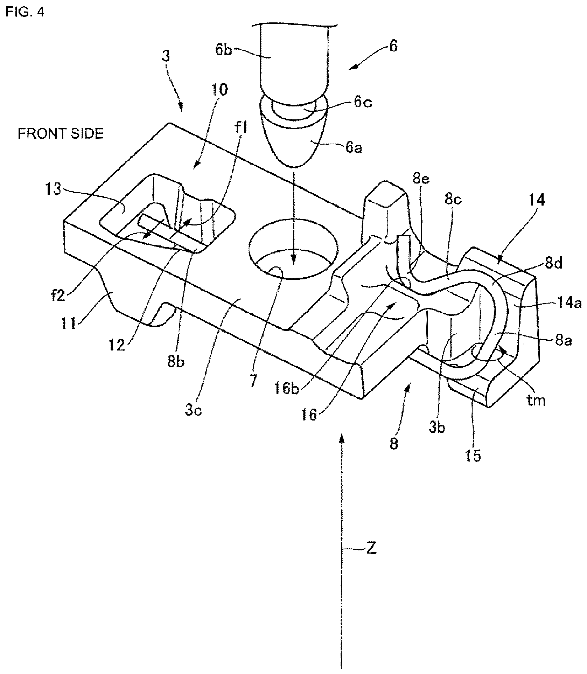

In order to attach and secure an accessory member, such as an airbag module, an installation part, to which an engaging part 6 (see FIG. 4) provided on the accessory member is attached, is provided on the central core metal part 3 of the steering wheel 1 around the boss part 2.

In the following description, the side of the central core metal part 3 that faces the driver is referred to as the front side, and the opposite side is referred to as the back side.

In the present embodiment, the installation part is formed by a through-hole 7 formed penetrating the central core metal part 3 from the front side to the back side.

The engaging part 6 of the accessory member is inserted into this through-hole 7, whereby the accessory member is attached to the central core metal part 3.

At least one through-hole 7 is formed, and in the illustrated example, three through holes are formed. The installation part is not limited to a hole shape, and may be in any shape as long as the engaging part 6 can be installed therein.

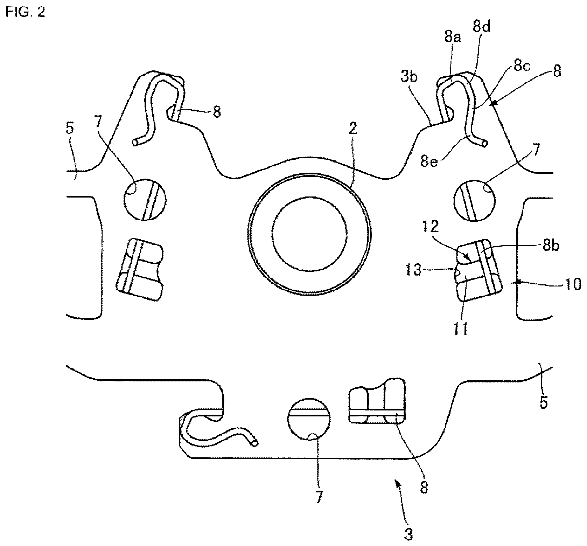

As depicted in FIG. 2, an engaging member 8 is arranged and attached on each of the through-holes 7 in the central core metal part 3.

The accessory member is connected to the central core metal part 3 by engaging each of the engaging parts 6 with each of the engaging members 8. In detail, when the engaging part 6 of the accessory member is moved in a first direction, the engaging part 6 is inserted through the through-hole 7, and at that time, the engaging part 6 engages with the engaging member 8, and thereby attaching to the central core metal part 3 is accomplished. The "first direction" here is a direction opposite to the insertion direction Z of the steering shaft (see FIG. 4).

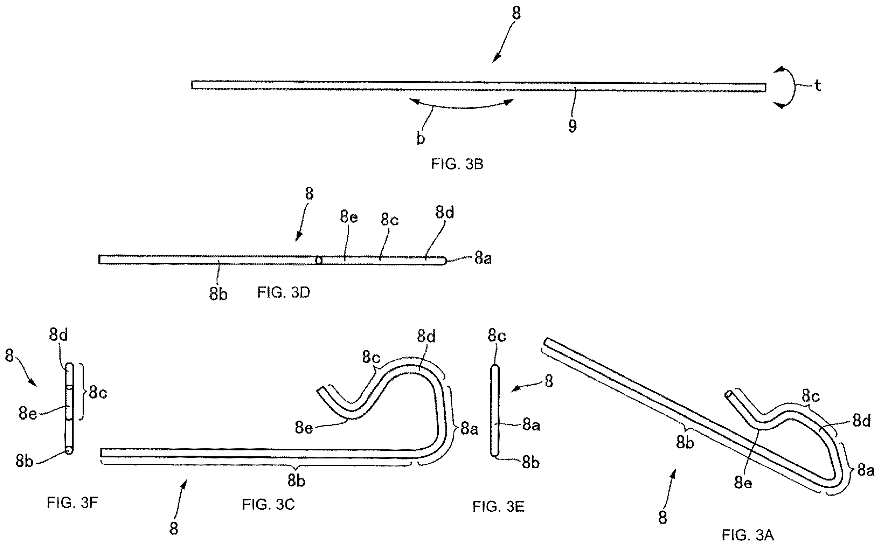

The engaging member 8 is depicted in FIG. 3. FIG. 3(A) is an perspective view of the engaging member 8, FIG. 3(B) is a diagram depicting wire 9 in a raw material state before being bent into the engaging member 8, and FIGS. 3(C) to 3(F) are a front view, a plan view, a right side view, and a left side view of the engaging member 8, respectively.

The engaging member 8 is formed of a wire 9. As depicted in Fig. 3(B), the wire 9 is configured to be elastically deformable in torsion about the axis of the wire 9 (indicated by t in the figure), and elastically deformable in bending in the extending direction, which is the length direction of the wire 9 (indicated by b in the diagram), and is formed of, for example, a metal material.

The expression that the wire 9 is "elastically deformable in bending in the extending direction thereof" indicates that the wire 9 is capable of undergoing deformation in which the wire bends, in a direction intersecting the axial direction, on a plane on which the wire 9 is placed, in a manner allowing elastic restoration.

As depicted in FIGS. 3C to 3F, the engaging member 8 is formed so that the entire narrow length thereof is in contact with a substantially flat plane from a first end to a second end in the extending direction.

The wire 9 may be manufactured, for example, by bending, press forming using a metal die, or by using any other known method.

The wire 9 has a fold-back part 8a at an intermediate portion in the extending direction thereof where the second end is folded back toward the first end, thereby changing the extending direction of the wire 9.

The area between the fold-back part 8a and the first end constitutes a first shaft part 8b that is formed in a straight line and is connected to the fold-back part 8a. The area between the fold-back part 8a and the second end constitutes a second shaft part 8c.

In other words, the wire 9 of the engaging member 8 is formed to have a first shaft part 8b and a second shaft part 8c on both sides of the fold-back part 8a.

The fold-back part 8a is a portion that generates at least a torsional elastic moment around the axis of the wire 9.

At least the first shaft part 8b and the second shaft part 8c portions receive a torsional force from the fold-back part 8a, and are elastically deformable in bending along the extending direction of the wire 9.

The second shaft part 8c includes a convex curved part 8d that is connected to the fold-back part 8a. The second shaft part 8c includes a concave bent part 8e that is connected to the convex curved part 8d so as to reach from the convex curved part 8d to the second end of the wire 9.

The convex curved part 8d and the concave bent part 8e of the second shaft part 8c are elastically deformable in the bending direction along the extending direction of the wire 9 as well as in the twisting direction around the axis of the wire 9, generating a resilience force in the second shaft part 8c.

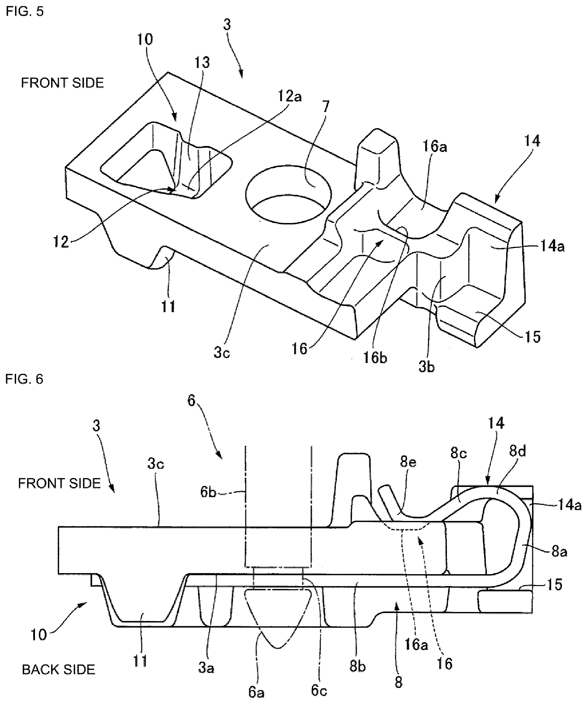

FIG. 4 and FIG. 5 are perspective views of the central core metal part 3 in which the through-hole 7 is formed, as viewed from the front side.

FIG. 4 depicts the state in which the engaging member 8 has been attached to the central core metal part 3, and FIG. 5 depicts the state before the engaging member 8 is attached.

FIGS. 6 to 11 are views of the central core metal part 3 to which the engaging member 8 depicted in FIG. 4 is attached, viewed from various directions.

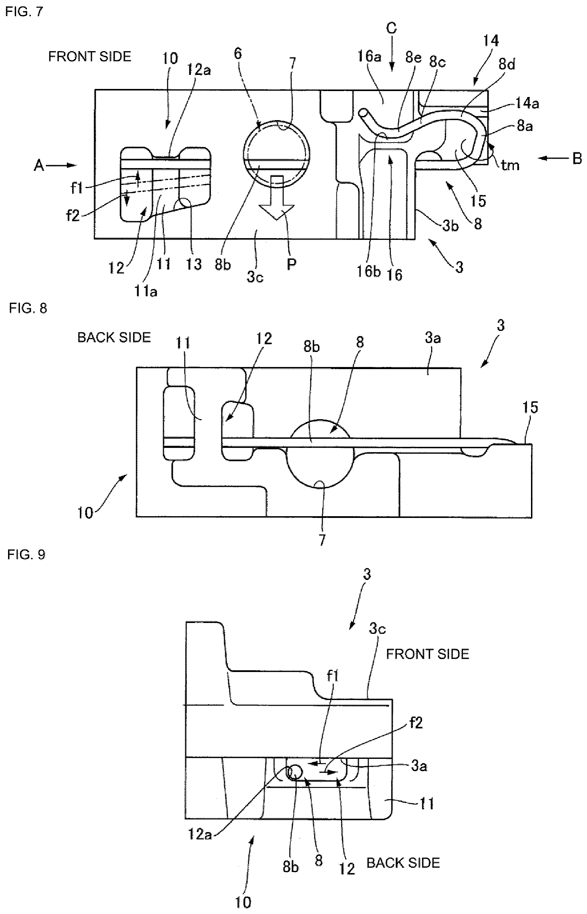

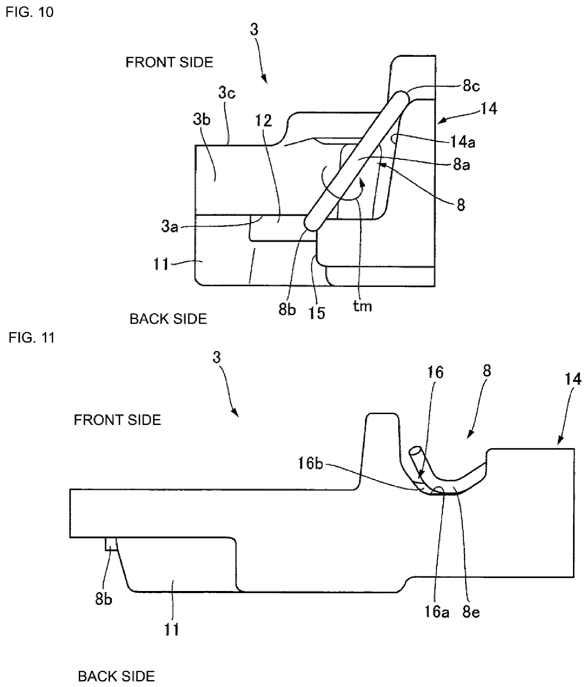

FIG. 6 is a view of the central core metal part 3 from the side, FIG. 7 is a view of the central core metal part 3 from the front side, FIG. 8 is a view of the central core metal part 3 from the back side, FIG. 9 is a view taken in the direction of arrow A in FIG. 7, FIG. 10 is a view taken in the direction of arrow B in FIG. 7, and FIG. 11 is a view taken in the direction of arrow C in FIG. 7.

As described above, the central core metal part 3 has a through-hole 7 formed therein as an installation part into which the engaging part 6 of the accessory member is inserted.

As depicted in FIG. 6, FIG. 9 and FIG. 10, a back surface 3a of the central core metal part 3 is formed as a substantially flat surface in the vicinity of the through-hole 7 to enable installation of the engaging member 8.

As described below, the first shaft part 8b of the engaging member 8 is attached to the back surface 3a, which is a first of the front and back surfaces 3a, 3c of the central core metal part 3, and the second shaft part 8c is attached to a second surface that is a front surface 3c of the central core metal part 3 at a position three-dimensionally offset in the insertion direction of the steering shaft inserted into the boss part 2 of the central core metal part 3 (indicated by the arrow Z direction in FIG. 4) relative to the back surface 3a of the central core metal part 3 to which the first shaft part 8b is attached.

In this specification, a "three-dimensionally offset position" refers to the positional relationship between a first plane orthogonal to the insertion direction Z of the steering shaft and a second plane orthogonal to the insertion direction Z at a different offset position from the first plane. According to the illustrated example, if the back surface 3a of the central core metal part 3 to which the steering shaft is connected and on which the first shaft part 8b is disposed, is defined as the first plane, the front surface 3c of the central core metal part 3 on which the second shaft part 8c is arranged is defined as the second plane, and the positional relationship between these front and back surfaces 3a, 3c is the three-dimensionally offset position.

A retention part 10 is formed on a back surface 3a of the central core metal part 3. The retention part 10 is provided on the back surface 3a, which, of the front and back surfaces 3a, 3b of the central core metal part 3, is near the through-hole 7, and retains the first shaft part 8b of the wire 9 passing through the through-hole 7 so as to be freely rotatable around the axis of the wire 9 and slide freely relative to the through-hole 7.

The retention part 10 is formed on one of the two sides of the back surface 3a of the central core metal part 3 across the through-hole 7, and retains the first shaft part 8b. The retention part 10 may include at least a part of the flat back surface 3a of the central core metal part 3.

In the present embodiment, a rear protruding part 11 is formed adjacent to the through-hole 7 by protruding from the back surface 3a of the central core metal part 3.

The rear protruding part 11 is provided with a retaining through-hole 12 which is formed flush with the back surface 3a of the central core metal part 3 and serves to retain the first shaft part 8b. A part of the first shaft part 8b is disposed in the retaining through-hole 12 on the back surface 3a side of the central core metal part 3.

As described below, the first shaft part 8b passes across the through-hole 7 on the back surface 3a side of the central core metal part 3, is inserted into the retaining through-hole 12, and is retained by the back surface 3a of the central core metal part 3 itself.

In the illustrated example, the retaining through-hole 12 is provided in the central core metal part 3 as a recessed part 13 formed toward the back side at the position of the rear protruding part 11.

The first shaft part 8b is inserted across this recessed part 13 and is retained by the back surface 3a of the central core metal part 3 on both sides of the recessed part 13.

Since the back surface 3a of the central core metal part 3 around the through-hole 7 is an approximately flat surface, the first shaft part 8b is provided on the central core metal part 3 so as to be freely rotatable around an axis relative to the back surface 3a, and to be freely slidable along the back surface 3a of the central core metal part 3 relative to the through-hole 7.

The retaining through-hole 12 has a corner part 12a formed on the back surface 3a of the central core metal part 3, as depicted in FIG. 9.

By forming the corner part 12a, excessive or unnecessary movement of the first shaft part 8b, which is movable along the back surface 3a of the central core metal part 3, can be restricted.

As long as the corner part 12a that restricts movement of the first shaft part 8b can be obtained, the retaining through-hole 12 need not be in the form of a hole, but may be in the form of a retaining groove.

However, with the present embodiment, the formation of the retaining through-hole 12 enables the first shaft part 8b to be surrounded and securely retained.

The rear protruding part 11 has a guide surface 11a at a position facing the retaining through-hole 12 (see FIG. 7). The guide surface 11a extends in a direction parallel to the back surface 3a of the central core metal part 3, and a first end of the guide surface 11a is connected to the corner part 12a. The direction in which the guide surface 11a extends (second direction) is a direction orthogonal to the movement direction of the engaging part 6 of the accessory member when engaged with the engaging member 8 (first direction described above). When the engaging part 6 of the accessory member is engaged with the engaging member 8, the guide surface 11a restricts deformation of the first shaft part 8b in a first direction (downward direction in FIG. 4) and encourages displacement of the first shaft part 8b in a second direction (direction indicated by arrow P in FIG. 7).

A support part 14 is formed on the front side of the central core metal part 3, wrapping around an edge 3b (see FIG. 2, FIG. 4, and the like) of the central core metal part 3 that wraps around from the back surface 3a to the front surface 3c, for abutting and supporting the second shaft part 8c.

In other words, of the front and back surfaces 3a, 3b of the central core metal part 3, the support part 14 is provided on the front surface 3c near the through-hole 7, and supports the second shaft part 8c so that the first shaft part 8b is held in a twisted state by the retention part 10.

The support part 14 is configured in the form of a vertical wall that rises up to the front side of the central core metal part 3. As depicted in FIG. 4, the support part 14 is provided with a support surface 14a facing the fold-back part 8a.

The support part 14 is provided on one of both sides of the through-hole 7, located opposite the rear protruding part 11.

As depicted in FIG. 7 and other figures, the support part 14 is formed separated from the retaining through-hole 12, on the opposite side of the retaining through-hole 12 position relative to the through-hole 7.

In other words, the support part 14 that supports the second shaft part 8c is provided on the opposite side of the through-hole 7 with respect to the retention part 10 that retains the first shaft part 8b.

Of course, the support part 14 and the retention part 10 may also be disposed in the opposite manner to that described above, with the support part 14 provided on the back surface 3a of the central core metal part 3 for supporting the second shaft part 8c, and the retention part 10 being provided on the front surface 3c for retaining the first shaft part 8b.

As a result, the engaging member 8, which is formed by bending the wire 9 so that the entire member is in contact with a substantially flat plane, has the first shaft part 8b retained by the retention part 10, with the fold-back part 8a sandwiched therebetween, and the second shaft part 8c abuttingly supported by the support part 14, allowing the second shaft part 8c to occupy a twisted position relative to the straight first shaft part 8b.

The position of twist is a well-known geometric concept, and with the present embodiment, it means that the first shaft part 8b and the second shaft part 8c (convex curved part 8d) have a relationship of not being parallel, nor do the first shaft part 8b and the second shaft part 8c (convex curved part 8d) intersect, and that the first shaft part 8b and the second shaft part 8c (convex curved part 8d) are not on the same plane.

In order to retain the first shaft part 8b and the second shaft part 8c connected by the fold-back part 8a in a twisted position, the support part 14 through which the second shaft part 8c receives a support reaction force is formed to have a vertical surface (vertical wall) as the support surface 14a, and the retention part 10 which retains the first shaft part 8b is formed to have a horizontal surface (back surface 3a of the central core metal part 3) along which the first shaft part 8b can move.

The first shaft part 8b and the second shaft part 8c occupy a twisted position, and the fold-back part 8a is twisted by the action and reaction generated between the convex curved part 8d, which is supported in contact with the support surface 14a of the support part 14 to obtain a support reaction force, and the first shaft part 8b retained by the retention part 10, thereby generating a torsional elastic moment.

By obtaining a support reaction force on the second shaft part 8c side, a torsional elastic moment is generated by the fold-back part 8a, and an elastic biasing force is applied to the first shaft part 8b to engage the engaging part 6 of the accessory member.

This torsional elastic moment acts to bias and move the first shaft part 8b in a direction toward the corner part 12a, as depicted by an arrow f1 in FIG. 4, FIG. 7, and FIG. 9.

In the present embodiment, a seat part 15 is formed on the central core metal part 3, on the back surface 3a side of the central core metal part 3, away from the support surface 14a of the support part 14, to support the connection portion between the fold-back part 8a and the first shaft part 8b.

Specifically, the seat part 15 is formed to protrude from the support part 14 toward the position where the first shaft part 8b is disposed.

The seat part 15 can appropriately retain the first shaft part 8b in a twisted position relative to the second shaft part 8c.

An additional support part 16 is further provided on the front side of the central core metal part 3, spaced away from the support part 14 toward the through-hole 7, and supports the second shaft part 8c via the support part 14, specifically the concave bent part 8e connected to the convex curved part 8d.

As depicted in FIG. 11, the additional support part 16 has a vertical wall-like additional support surface 16b that faces and rises up against a groove 16a formed by recessing the front side of the central core metal part 3 in a concave shape.

The additional support surface 16b of the additional support part 16 is formed to block the first shaft part 8b from the support surface 14a of the support part 14 in order to maintain the torsional position.

In other words, the additional support surface 16b prevents the engaging member 8 from returning to a flat state from the twisted state, and the second shaft part 8c from achieving a parallel relationship with the first shaft part 8b (positioned in the same plane).

The concave bent part 8e of the second shaft part 8c receives a support reaction force on the additional support surface 16b, and generates bending elastic deformation and twisting elastic deformation between the support part 14 and the additional support part 16.

As a result, a resilience force is generated between the support part 14 and the additional support part 16, which presses and biases the convex curved part 8d, which is supported in contact with the support surface 14a of the support part 14, toward the support surface 14a.

The engaging part 6 of the accessory member may have any shape, such as a groove shape or a hook shape, so long as it is capable of engaging with the engaging member 8 formed of the wire 9.

As depicted in FIG. 4 and FIG. 6, the engaging part 6 is formed by, for example, forming a constricted part 6c at the middle of a rod 6b where the outer diameter of the rod 6b is reduced, and having a cone part 6a at the tip thereof.

When the rod 6b is inserted from the front side to the back side of the central core metal part 3 with the cone part 6a facing the through-hole 7, the first shaft part 8b of the engaging member 8 is moved so as to be pushed away in a direction deviating from the position of the through-hole 7 (indicated by arrow P in FIG. 7) between the cone part 6a and the constricted part 6c, as depicted by arrow f2 in FIG. 4, FIG. 7, and FIG. 9. This movement is assisted by the guide surface 11a.

Thereafter, the first shaft part 8b elastically returns to the original state thereof so as to enter the constricted part 6c, thereby engaging with the engaging part 6.

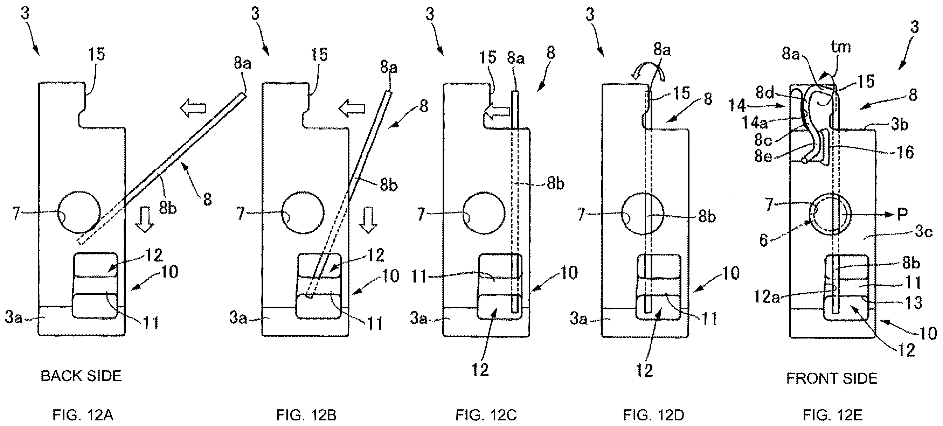

Next, operation of the vehicle steering wheel device according to the present embodiment will be described. FIG. 12 depicts a procedure for attaching the engaging member 8 to the central core metal part 3.

FIG. 12(A) to 12(D) are diagrams depicting the central core metal part 3 as viewed from the back side, and FIG. 12(E) is a diagram depicting the central core metal part 3 as viewed from the front side.

As depicted in FIG. 12(A), first, the first shaft part 8b of the engaging member 8 is inserted along the back surface 3a of the central core metal part 3 from near the through-hole 7 toward the retaining through-hole 12.

Next, as depicted in FIG. 12(B), the first shaft part 8b is passed through the retaining through-hole 12 toward the retention part 10.

Next, as depicted in FIG. 12C, the first shaft part 8b is inserted into the retaining through-hole 12, and the first shaft part 8b is oriented so that the fold-back part 8a of the engaging member 8 faces the seat part 15.

Next, as depicted in FIG. 12 (D), the fold-back part 8a is abutted against the seat part 15, and the first shaft part 8b is moved so as to pass through the through-hole 7 position and is positioned at the corner part 12a of the retaining through-hole 12.

Thereafter, with the fold-back part 8a abutting against the seat part 15, the entire engaging member 8 is rotated around the axis of the first shaft part 8b.

Thus, as depicted in FIG. 12(E), the convex curved part 8d of the second shaft part 8c is supported by the support surface 14a of the support part 14, and the concave bent part 8e is abutted to and supported by the support surface 16b of the additional support part 16.

With the procedure described above, the engaging member 8 is simply attached to the central core metal part 3 in preparation for engaging the engaging member 8 to the engaging part 6 of the accessory member.

By attaching the engaging member 8 to the central core metal part 3 as described above, the second shaft part 8c occupies a twisted position relative to the first shaft part 8b, so that a torsional elastic moment (indicated by tm in each diagram) can be generated in advance in the fold-back part 8a as an initial setting.

Specifically, while the first shaft part 8b is retained by the retention part 10, the convex curved part 8d of the second shaft part 8c, which is in a twisted position, is supported in contact with the support surface 14a of the support part 14, thereby generating a support reaction force, and thus generating a torsional elastic moment tm on the fold-back part 8a.

Movement of the first shaft part 8b is restricted by the corner part 12a, so that the torsional elastic moment tm can be reliably generated.

As depicted in FIG. 4, FIG. 6, and FIG. 12(E), when the engaging member 8 is engaged with the engaging part 6 of the accessory member, the first shaft part 8b is first pushed and moved (f2) by the cone part 6a of the engaging part 6 from the position at the time of installation at or near the corner part 12a described above along the back surface 3a of the central core metal part 3 in a direction P deviating from the through-hole 7 while rolling.

Specifically, first, the first shaft part 8b is moved in a direction P perpendicular to the moving direction of the engaging part 6 by the cone part 6a of the engaging part 6 which has moved downward in FIG. 4. If the guide surface 11a were not provided, the first shaft part 8b would be deformed downward due to the movement of the engaging part 6. However, due to the presence of the guide surface 11a, downward deformation of the first shaft part 8b is restricted. At this time, the first shaft part 8b is displaced, that is, moved (f2), by the guide surface 11a in the extending direction (direction P) of the guide surface 11a. This displacement increases the torsional elastic moment tm on the fold-back part 8a.

Note that if the design is changed so that the torsional elastic moment tm is not generated in the fold-back part 8a in the initial setting described above, the displacement of the first shaft part 8b described above will generate a torsional elastic moment tm in the fold-back part 8a.

Since the first shaft part 8b and the second shaft part 8c occupy a twisted position, the area around the through-hole 7 in the central core metal part 3 is left wide open and unobstructed, so that the engaging part 6 can be inserted into the through-hole 7 properly and smoothly.

When the first shaft part 8b moves, the support reaction force of the support part 14 on the second shaft part 8c increases, and a large torsional elastic moment tm can be generated by the fold-back part 8a.

The engaging part 6 is inserted into the through-hole 7 against the first shaft part 8b, which is strongly pressed and biased by the torsional elastic moment tm in a direction (f1) so as to return to the attached position.

Thereafter, the first shaft part 8b enters the constricted part 6c of the engaging part 6, and the engaging member 8 engages with the engaging part 6.

At this time, the position of the first shaft part 8b is different from the position at the time of installation and is separated from the corner part 12a in order to engage with the constricted part 6c.

As a result, a torsional elastic moment tm larger than the initial setting described above can be generated in the fold-back part 8a, and this torsional elastic moment tm heavily biases the first shaft part 8b in an elastic manner toward the constricted part 6c, thereby enabling the engaging part 6 to be firmly engaged.

In addition, at this time, the first shaft part 8b is in a twisted position with respect to the second shaft part 8c and tends to undergo elastic deformation in bending starting from the fold-back part 8a. Therefore, in addition to the torsional elastic moment tm, the restoring force of this bending elastic deformation is also added secondarily, thereby enabling the engaging part 6 to be securely engaged.

When the engaging member 8 engages with the engaging part 6, the concave bent part 8e of the second shaft part 8c is maintained in abutment against the additional support surface 16a of the additional support part 16, and a support reaction force is applied to the additional support surface 16a, generating a resilience force due to bending elastic deformation or torsional elastic deformation between the additional support part 16 and the support part 14 against which the convex curved part 8d is abutted and supported.

This resilience can provide a biasing force that presses the convex curved part 8d against the support surface 14a.

In the vehicle steering wheel device according to the present embodiment, when the engaging member 8 engages with the engaging part 6 of the accessory member, the first shaft part 8b and the second shaft part 8c are in a twisted position. In other words, with the vehicle steering wheel device, the accessory member is attached to the steering wheel 1 by engaging the engaging part 6 with the engaging member 8 provided on the central core metal part 3 so as to generate a torsional elastic moment.

As a result, unlike mounting structures in which elastic bending deformation easily occurs due to relative movement such as vibration, the engagement and retention of the accessory members with the steering wheel 1 can be sufficiently ensured by twisting, which has a stronger resistance than bending.

In other words, movement of the engaging member 8 (wire 9) that retains an object (accessory member) on the steering wheel 1 can be suppressed, while the engagement and retention action with the object can be sufficiently ensured.

Further, by providing the engaging member 8 (wire 9) so as to rise in the direction in which the object (such as an accessory member) is connected to the steering wheel 1, vibration of the engaging member 8 can be suppressed. In addition, planar expansion of the central core metal part 3 caused by the installation of the engaging member 8 can be reduced compared to a conventional design.

The engaging member 8 is composed of a wire 9 that is capable of elastic deformation in bending along the extending direction thereof and torsional elastic deformation around the axis thereof and includes a folded-back part 8a that generates a torsional elastic moment around the axis, as well as a first shaft part 8b and a second shaft part 8c provided on both sides of the folded-back part 8a. Therefore, the structure can be configured with extreme simplicity.

On one side of the through-hole 7, through which the engaging part 6 is inserted, a retention part 10 is provided that rotatably supports the first shaft part 8b about the axis thereof and allows sliding relative to the through-hole 7. On the opposite side of the holding part 10, the second shaft part 8c is supported so as to be capable of occupying a twisted position relative to the first shaft part 8a [sic]. Further, a support part 14 is provided on the fold-back part 8a, which generates a torsional elastic moment for engaging the first shaft part 8b with the engaging part 6. Accordingly, the engaging part 6 is engaged and retained by the torsional elastic moment generated in the engaging member 8.

The twisted position occupied by the engaging member 8 is obtained by the support part 14 having a vertical surface and the retention part 10 having a horizontal surface intersecting the vertical surface, and therefore the structure can be extremely simple.

The first shaft part 8b is formed in a straight line and is connected to the fold-back part 8a, the second shaft part 8c has a convex curved part 8d connected to the fold-back part 8a, the support part 14 has a support surface 14a facing the fold-back part 8a, and the convex curved part 8d is supported in contact with the support surface 14a. With this simple configuration, a torsional elastic moment can be reliably generated in the fold-back part 8a.

An additional support part 16 is provided at a distance from the support part 14 and supports the second shaft part 8c that passes through the support part 14. The additional support part 16 receives the support reaction force of the second shaft part 8c, and a resilience force is generated between the support part 14 and the additional support part 16 to press the second shaft part 8c against the support part 14. This allows the second shaft part 8c to be reliably supported in contact with the support part 14, and a torsional elastic moment can be reliably generated in the fold-back part 8a.

The additional support part 16 is provided with an additional support surface 16b that is separated from the support part 14 and blocks the first shaft part 8b from the support surface 14a, so that the torsional position of the second shaft part 8c relative to the first shaft part 8b can be reliably maintained.

The concave bent part 8e is supported in contact with the additional support surface 16b so that a resilience force is generated between the support surface 14a and the additional support surface 16b, pressing the convex curved part 8d against the support surface 14a. This ensures that the convex curved part 8d is supported in contact with the support surface 14a of the support part 14, and a torsional elastic moment can be reliably generated in the fold-back part 8a.

The vehicle steering wheel device described above is a preferred example of the present invention, and other exemplar embodiments can also be implemented or carried out by various methods. In particular, unless otherwise described in the specification of the present application, the invention is not restricted to the shapes, sizes, configuration, arrangements, and the like of the parts illustrated in detail in the accompanying drawings. In addition, the expressions and terms used in the specification of the present application are used for providing a description, without limiting the invention thereto, unless specifically described otherwise.

### Additional Considerations for Various Aspects

### Aspect 1

A vehicle steering wheel device, comprising:
an engaging member attached to a core metal of a steering wheel that engages an engaging part of an accessory member so as to couple the accessory member to the core metal, wherein
the engaging member is composed of a wire, and includes a fold-back part at an intermediate portion in the extending direction of the wire that changes the extending direction of the wire, and a first shaft part and a second shaft part formed on both sides of the fold-back part, and
the first shaft part and the second shaft part are attached to the core metal such that, in a state where the engaging part of the accessory member is engaged, the first shaft part and the second shaft part are in a twisted positional relationship.

Aspect 2

The vehicle steering wheel device according to Aspect 1, wherein
the first shaft part and the second shaft part are attached to the core metal such that the first shaft part and the second shaft part are in a twisted positional relationship even in an initial state prior to engaging of the engaging part of the accessory member by the engaging member.

### Aspect 3

The vehicle steering wheel device according to Aspect 1 or 2, wherein the engaging member is configured to engage the engaging part of the accessory member with the first shaft part by movement of the engaging part in a first direction, and
the engaging member is configured such that movement of the engaging part of the accessory member in the first direction causes the first shaft part to be displaced in a second direction orthogonal to the first direction, thereby generating or increasing a torsional elastic moment in the fold-back part.

### Aspect 4

The vehicle steering wheel device according to Aspect 3, wherein
the core metal includes a guide surface extending in the second direction, and the guide surface restricts deformation of the first shaft part in the first direction and promotes displacement of the first shaft part in the second direction when the engaging part of the accessory member is engaged with the engaging member.

### Aspect 5

The vehicle steering wheel device according to any one of Aspects 1 to 4, wherein
the first shaft part of the engaging member is attached to the front surface of the core metal, and the second shaft part is attached to the core metal at a position three-dimensionally offset in the insertion direction of the steering shaft inserted into the boss part of the core metal relative to the surface of the core metal to which the first shaft part is attached.

Aspect 6

The vehicle steering wheel device according to Aspect 5, wherein
the core metal includes:
an installation part on which the engaging part of the accessory member is installed,
a retention part, provided on a first surface of both the front and rear surfaces of the core metal near the installation part, the retention part rotatably supporting the first shaft part of the wire passing through the installation part about the axis of the wire and slidably retaining relative to the installation part, and
a support part, provided on a second surface of the front and rear surfaces of the core metal near the installation part, the support part supporting the second shaft part.

### Aspect 7

The vehicle steering wheel device according to Aspect 6, wherein
the wire is configured to be elastically deformable in bending along the extending direction thereof and elastically deformable in torsion about the axis thereof;
the fold-back part of the wire is configured to generate a torsional elastic moment about the axis of the wire; and
the support part of the core metal retains the second shaft part such that the first shaft part is retained in a twisted state.

### Aspect 8

The vehicle steering wheel device according to Aspect 6 or 7, wherein
the engaging member is configured such that, by engaging of the first shaft part with the engaging part of the accessory member, the first shaft part is slidably moved while being supported by the retention part, and
a torsional elastic moment is generated in the fold-back part between the moved first shaft part and the second shaft part, with the second shaft part receiving a support reaction force from the support part, thereby pressing the first shaft part against the engaging part.

### Aspect 9

The vehicle steering wheel device according to any one of Aspects 6 to 8, wherein
the support part includes a vertical surface, and
the retention part includes a horizontal surface that intersects with the vertical surface.

### Aspect 10

The vehicle steering wheel device according to any one of Aspects 6 to 9, wherein
the first shaft part is formed in a straight shape and is connected to the fold-back part,
the second shaft part includes a convex curved part connected to the fold-back part,
the support part includes a support surface oriented to face the fold-back part, and
the convex curved part is brought into contact with and supported by the support surface such that a torsional elastic moment is generated in the fold-back part.

Aspect 11

The vehicle steering wheel device according to any one of Aspects 6 to 10, wherein
an additional support part is provided separated from the support part that supports the second shaft part via the support part, and
a support reaction force of the second shaft part is received by the additional support part, whereby a resilience force is generated between the support part and the additional support part pressing the second shaft part against the support part.

### Aspect 12

The vehicle steering wheel device according to Aspect 11, wherein
the second shaft part includes a concave bent part connected to the convex curved part,
the additional support part is provided separated from the support part and includes an additional support surface that blocks the first shaft part from the support surface, and
the concave bent part is brought into contact with and supported by the additional support surface such that a resilience force is generated between the support surface and the additional support surface, thereby pressing the convex curved part against the support surface.

### Description of Reference Numerals

1. Steering wheel
2. Boss part
3. Central core metal part
3a. Back surface of central core metal part
3c. Front surface of central core metal part
6. Engaging part
7. Through hole
8. Engaging member
8a. Fold-back part
8b. First shaft part
8c. Second shaft part
8d. Convex curved part
8e. Concave bent part
9. Wire
10. Retention part
14. Support part
14a. Support surface
16. Additional support part
16b. Additional support surface
Z. Steering shaft insertion direction

## Claims

1. A vehicle steering wheel device, comprising:
an engaging member attached to a core metal of a steering wheel that engages an engaging part of an accessory member so as to couple the accessory member to the core metal, wherein
the engaging member is composed of a wire, and includes a fold-back part at an intermediate portion in the extending direction of the wire that changes the extending direction of the wire, and a first shaft part and a second shaft part formed on both sides of the fold-back part, and
the first shaft part and the second shaft part are attached to the core metal such that, in a state where the engaging part of the accessory member is engaged, the first shaft part and the second shaft part are in a twisted positional relationship.

2. The vehicle steering wheel device according to claim 1, wherein
the first shaft part and the second shaft part are attached to the core metal such that the first shaft part and the second shaft part are in a twisted positional relationship even in an initial state prior to engaging of the engaging part of the accessory member by the engaging member.

3. The vehicle steering wheel device according to claim 1 or 2, wherein
the engaging member is configured to engage the engaging part of the accessory member with the first shaft part by movement of the engaging part in a first direction, and
the engaging member is configured such that movement of the engaging part of the accessory member in the first direction causes the first shaft part to be displaced in a second direction orthogonal to the first direction, thereby generating or increasing a torsional elastic moment in the fold-back part.

4. The vehicle steering wheel device according to claim 3, wherein
the core metal includes a guide surface extending in the second direction,
the guide surface restricts deformation of the first shaft part in the first direction and promotes displacement of the first shaft part in the second direction when the engaging part of the accessory member is engaged with the engaging member.

5. The vehicle steering wheel device according to claim 1 or 2, wherein
the first shaft part of the engaging member is attached to the front surface of the core metal, and the second shaft part is attached to the core metal at a position three-dimensionally offset in the insertion direction of the steering shaft inserted into the boss part of the core metal relative to the surface of the core metal to which the first shaft part is attached.

6. The vehicle steering wheel device according to claim 5, wherein
the core metal includes:
an installation part on which the engaging part of the accessory member is installed,
a retention part, provided on a first surface of both the front and rear surfaces of the core metal near the installation part, the retention part rotatably supporting the first shaft part of the wire passing through the installation part about the axis of the wire and slidably retaining relative to the installation part, and
a support part, provided on a second surface of the front and rear surfaces of the core metal near the installation part, the support part supporting the second shaft part.

7. The vehicle steering wheel device according to claim 6, wherein
the wire is configured to be elastically deformable in bending along the extending direction thereof and elastically deformable in torsion about the axis thereof;
the fold-back part of the wire is configured to generate a torsional elastic moment about the axis of the wire; and
the support part of the core metal retains the second shaft part such that the first shaft part is retained in a twisted state.

8. The vehicle steering wheel device according to claim 6, wherein
the engaging member is configured such that, by engaging of the first shaft part with the engaging part of the accessory member, the first shaft part is slidably moved while being supported by the retention part, and
a torsional elastic moment is generated in the fold-back part between the moved first shaft part and the second shaft part, with the second shaft part receiving a support reaction force from the support part, thereby pressing the first shaft part against the engaging part.

9. The vehicle steering wheel device according to claim 6, wherein
the support part includes a vertical surface, and
the retention part includes a horizontal surface that intersects with the vertical surface.

10. The vehicle steering wheel device according to claim 6, wherein
the first shaft part is formed in a straight shape and is connected to the fold-back part,
the second shaft part includes a convex curved part connected to the fold-back part,
the support part includes a support surface oriented to face the fold-back part, and
the convex curved part is brought into contact with and supported by the support surface such that a torsional elastic moment is generated in the fold-back part.

11. The vehicle steering wheel device according to claim 6, wherein
an additional support part is provided separated from the support part that supports the second shaft part via the support part, and
a support reaction force of the second shaft part is received by the additional support part, whereby a resilience force is generated between the support part and the additional support part pressing the second shaft part against the support part.

12. The vehicle steering wheel device according to claim 11, wherein
the second shaft part includes a concave bent part connected to the convex curved part,
the additional support part is provided separated from the support part and includes an additional support surface that blocks the first shaft part from the support surface; and
the concave bent part is brought into contact with and supported by the additional support surface such that a resilience force is generated between the support surface and the additional support surface, thereby pressing the convex curved part against the support surface.
